# EUROPÄISCHE PATENTSCHRIFT

(11) **EP 0 642 724 B1**
(45) Veröffentlichungstag und Bekanntmachung des Hinweises auf die Patenterteilung: **05.11.1997**
(21) Anmeldenummer: 93909767.1
(22) Anmeldetag: 14.05.1993
(51) Int. Cl.: H04N 5/63

(54) **RÖHRENBILDSCHIRMGERÄT MIT WARTESTELLUNGSFUNKTION**
VACUUM-TUBE SCREEN DEVICE WITH A STAND-BY CONTROL FUNCTION
TERMINAL AVEC ECRAN CATHODIQUE COMPORTANT UNE FONCTION DE POSITION D'ATTENTE

(30) Priorität: 27.05.1992 DE 4217601
(43) Veröffentlichungstag der Anmeldung: 15.03.1995
(73) Patentinhaber: Siemens Nixdorf Informationssysteme Aktiengesellschaft, 33102 Paderborn (DE)
(72) Erfinder: BÄSSLER, Erwin, D-86343 Königsbrunn (DE)
(74) Vertreter: Fuchs, Franz-Josef, Dr.-Ing.
(86) Internationale Anmeldenummer: DE9300425
(87) Internationale Veröffentlichungsnummer: WO9325044

(56) Entgegenhaltungen:
- EP-A- 0 236 869
- DE-A- 2 207 442
- US-A- 3 816 793
- IBM TECHNICAL DISCLOSURE BULLETIN Bd. 34, Nr. 9, Februar 1992, ARMONK (US) Seiten 281 - 283 UNGENANNT 'increasing lifetime and reliability of crt displays'
- PATENT ABSTRACTS OF JAPAN vol. 8, no. 277 (E-285)18. Dezember 1984 & JP-A-59 144 284

## Beschreibung

Die Erfindung betrifft ein Röhrenbildschirmgerät mit Wartestellungsfunktion gemäß dem Oberbegriff des Anspruchs 1.

Röhrenbildschirmgeräte, wie zum Beispiel Datensichtgeräte, setzen in Anwendungspausen im eingeschalteten Zustand Energie ungenützt in Wärme um. Außerdem ist bei Dauerbetrieb das Lebensdauerende der Bildröhre schnell erreicht und die voraussehbare durchschnittliche fehlerfreie Betriebsdauer der Ablenkeinrichtung erreicht nur geringe Werte.

Um diese Nachteile zu vermeiden wurde bisher vorgeschlagen, das Videosignal abzuschalten und die Bildröhrenheizung und die Ablenkeinrichtung wie bei Normalbetrieb weiterlaufen zu lassen. Die Strahlleistung der Bildröhre wird hierbei zwar bei gegebener Sofortbildfunktion reduziert, aber die Gefahr einer Kathodenvergiftung bleibt bestehen.

Bei einer anderen Realisierung wird nur die Bildröhrenheizung aufrecht erhalten, wodurch sich eine starke Leistungsreduzierung bei gegebener Sofortbildfunktion ergibt. Es besteht aber die Gefahr der Kathodenvergiftung.

Es gibt ferner die Möglichkeit, die Netzspannung abzuschalten. Die Leistungsreduzierung beträgt dann 100 %. Die Sofortbildfunktion ist aber nicht mehr gegeben. Ein häufiges Ein- und Ausschalten des Röhrenbildschirmgerätes gefährdet zudem die Heizkathode.

Bekannt ist außerdem die Möglichkeit, das Röhrenbildschirmgerät noch eine vorgegebene Zeitspanne weiterlaufen zu lassen, dann das Videosignal abzuschalten und nach einer weiteren vorgegebenen Zeitspanne auch die Netzspannung abzuschalten. Die Leistungsreduzierung und die Sofortbildfunktion hängen dann vom Anwendungsprofil ab. Ein ungünstiges Anwendungsprofil kann aber wiederum die Heizkathode gefährden.

Aus IBM Technical Disclosure Bulletin, Vol. 34, No. 9, Feb. 1992, Armonk (US), Seiten 281 bis 283 sind Maßnahmen zur Erhöhung der Lebensdauer und der Ausfallsicherheit eines Röhrenbildschirmgerätes bekannt. Die Maßnahmen schließen die vollständige oder teilweise Abschaltung des Röhrenbildschirmgerätes bei vollständiger oder teilweiser Aufrechterhaltung der Kathodenbeheizung ein. In einer zusätzlichen Ausgestaltungsmöglichkeit wird vorgeschlagen, an einer der Gitterelektroden eine derartig gewählte Vorspannung anzulegen, daß ein Strahlstrom gestoppt wird. Diese Maßnahmen tragen zwar zur Verringerung der Verlustleistung in der Wartestellung und damit zur Bauteileschonung bei, bei gegebener Sofortbildfunktion. Durch diese Maßnahmen wird aber nicht verhindert, daß eine Kathodenvergiftung eintritt. Diese kann deshalb eintreten, weil in keinem der Fälle sicher dafür gesorgt wird, daß eine aufgrund der Kathodenbeheizung und einem nachwievor anliegenden unbestimmten Videosignal erzeugte Elektronenwolke an der Kathode abgezogen wird.

Aus den Dokumenten EP-A-0 236 869 und DE-B-23 22 875 sind Maßnahmen zur Reduzierung der Heizspannung der Bildröhre eines Röhrenbildschirmgerätes in einem Bereitschaftsbetrieb bekannt, die aber die eingangs geschilderten Probleme bei Röhrenbildschirmgeräten im Bereitschaftsbetrieb nicht lösen.

Aus dem Dokument DE-A-26 24 965 ist ein Schaltnetzteil für einen Fernsehempfänger bekannt, das zur Erzeugung einer Hilfs-Betriebsspannung besonders ausgebildet ist. Die eingangs geschilderten Probleme bei Röhrenbildschirmgeräten im Bereitschaftsbetrieb werden aber durch dieses Schaltnetzteil auch nicht gelöst.

Aufgabe der Erfindung ist es deshalb, ein Röhrenbildschirmgerät mit Wartestellungsfunktion der eingangs genannten Art anzugeben, das in Anwendungspausen den Leistungsverbrauch erheblich reduziert, eine Sofortbildfunktion beibehält und eine Gefahr der Kathodenvergiftung nicht aufweist.

Diese Aufgabe wird durch die im Anspruch 1 gekennzeichneten Merkmale gelöst.

Danach wird in Kombination der Heizstrom für die Bildröhrenheizung reduziert und die für den Leistungsverbrauch verantwortliche Ablenkeinrichtung sowie der Videoverstärker abgeschaltet. Gleichzeitig wird die Kathode und eine vorgegebene Elektrode der Bildröhre mit einer vorgegebenen Energie versorgt. Es ergibt sich in Anwendungspausen eine starke Leistungsreduzierung bei beibehaltener Sofortbildfunktion und Ausbleiben der Gefahr einer Kathodenvergiftung.

Eine Reduzierung allein des Videosignals und der Bildröhrenheizleistung, während die Ablenkeinrichtung wie bei Normalbetrieb weiterläuft, birgt zwar bei beibehaltener Sofortbildfunktion auch schon keine Gefahr der Kathodenvergiftung mehr in sich. Die erzielte Leistungsreduzierung ist aber nicht so groß.

Vorteilhafte Ausgestaltungen der Erfindung sind in den abhängigen Ansprüchen gekennzeichnet.

Nachfolgend wird die Erfindung anhand der in der Zeichnung dargestellten Ausführungsformen näher erläutert.
Es zeigen
Figur 1 ein erstes Ausführungsbeispiel eines erfindungsgemäßen Röhrenbildschirmgerätes mit Wartestellungsfunktion in Prinzipdarstellung und
Figur 2 ein zweites Ausführungsbeispiel eines erfindungsgemäßen Röhrenbildschirmgerätes mit Wartestellungsfunktion in Prinzipdarstellung.

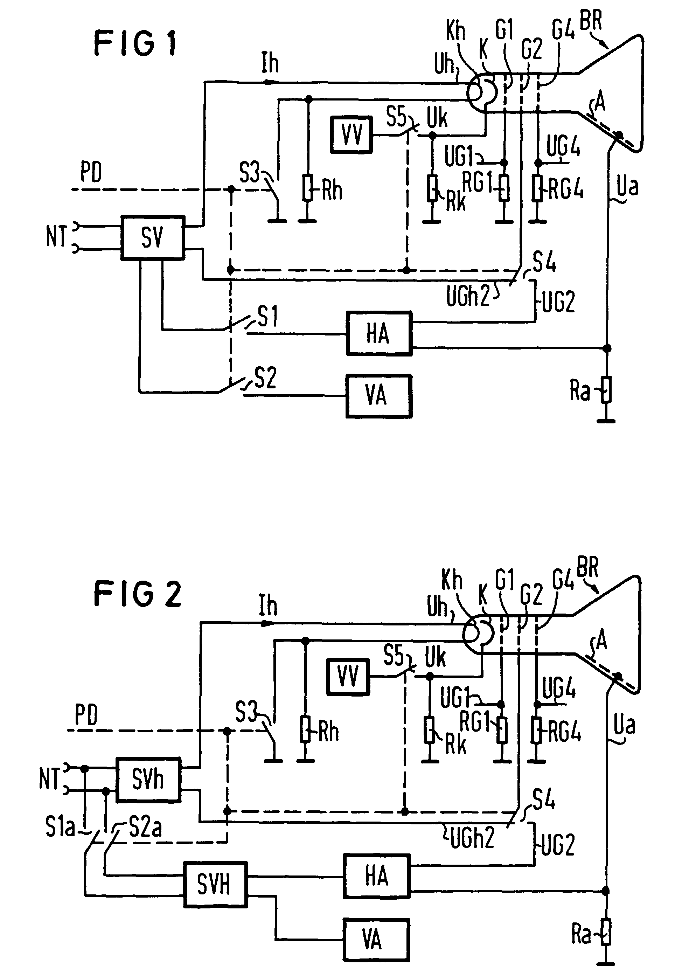

Die in den Figuren 1 und 2 gezeigten Röhrenbildschirmgeräte unterscheiden sich in einer Stromversorgungseinrichtung SV (Figur 1), die in Figur 2 eine Haupt- und eine Hilfsstromversorgungseinheit SVH, SVh umfaßt. In der Figur 1 versorgt die Stromversorgungseinrichtung SV eine Kathodenheizung Kh einer Bildröhre BR und eine zur Bildröhre BR gehörende Vertikal- und Horizontal-Ablenkeinrichtung VA, HA mit Energie. In der Figur 2 versorgt die Hilfsstromversorgungseinheit SVh die Kathodenheizung Kh der Bildröhre BR und die Hauptstromversorgungseinheit SVH die zur Bildröhre BR gehörende Vertikal- und Horizontal-Ablenkeinrichtung VA, HA mit Energie. Die Stromversorgungseinrichtung SV wie auch die Haupt- und Hilfsstromversorgungseinrichtung SVH, SVh beziehen eine Primärenergie aus einem Wechselstromnetz NT.

In der Figur 1 trennt ein erster Schalter S1 die Horizontal-Ablenkeinrichtung HA und ein zweiter Schalter S2 die Vertikal-Ablenkeinrichtung VA von der Stromversorgungseinrichtung SV. In der Figur 2 wird über zwei Schalter Sla, S2a die Hauptstromversorgungseinheit SVH vom Wechselstromnetz NT abgekoppelt und damit auch die nachgeschaltete Vertikal- und Horizontal-Ablenkeinrichtung VA, HA.

Die Bildröhre BR weist in beiden Figuren die bereits angesprochene Kathodenheizung Kh und daneben eine Kathode K, drei hintereinander angeordnete Gitter und eine Anode A auf. Aufbau und Wirkungsweise einer Bildröhre ist aus der einschlägigen Literatur bekannt, weswegen hier nur insoweit darauf eingegangen wird, als es für eine Begriffsbestimmung notwendig ist. So kann zum Beispiel das erste Gitter auch als Steuerelektrode G1 und das zweite und dritte Gitter als erste und zweite Beschleunigungselektrode G2, G4 für die von einer aufgeheizten Kathode K freigesetzten Elektronen aufgefaßt werden.

Die Gitterspannungen UG1, UG2, UG4 für die Steuerelektrode G1 und die erste und zweite Beschleunigungselektrode G2, G4 sowie die Anodenhochspannung Ua werden in beiden Figuren von der Horizontal-Ablenkeinrichtung HA erzeugt. Wird die Horizontal-Ablenkeinrichtung HA über die Schalter S1 bzw. Sla, S2a stromlos geschaltet, werden die Gitterspannungen UG1, UG2, UG4 und die Anodenhochspannung Ua nicht mehr erzeugt. Damit an der Steuerelektrode G1, der zweiten Beschleunigungselektrode G4 und der Anode A dann sicher eine Spannung von 0 Volt anliegt, sind an jeweils zugehörigen Punkten auf Masse bezogene Widerstände RG1, RG4, Ra angeschlossen.

Für die erste Beschleunigungselektrode G2 wird anstelle der zugehörigen Spannung UG2 über einen Umschalter S4 eine Hilfsspannung UGh2 angelegt, die in der Figur 1 aus der Stromversorgungseinrichtung SV und in der Figur 2 aus der Hilfsstromversorgungseinheit SVh erzeugt wird.

An der Kathode K der Bildröhre BR ist in beiden Figuren ein Videoverstärker VV und ein auf Masse bezogener Ableitwiderstand Rk angeschlossen. Der Videoverstärker VV kann über einen weiteren Schalter S5 von der Kathode K abgekoppelt werden. Solange der Videoverstärker VV auf die Kathode K geschaltet ist, liegt an der Kathode K ein variables Videosignal Uk an. Wird der Videoverstärker VV durch den Schalter S5 von der Kathode K abgetrennt, liegt an der Kathode K über den Ableitwiderstand Rk die Spannung 0 Volt an. In diesem Fall wird die Bildröhre BR in vollem Umfang und konstant weiß gesteuert. Der sich hierbei ergebende Bildweißwert entspricht dann einem Nennwert.

Die Kathodenheizung Kh, die in der Figur 1 über die Stromversorgungseinrichtung SV und in der Figur 2 über die Hilfsstromversorgungseinheit SVh mit einer Heizspannung Uh bzw. einem Heizstrom Ih versorgt wird, ist über eine Parallelschaltung aus einem Schalter S3 und einem Heizstrombegrenzer Rh in ihrer Heizleistung beeinflußbar, indem der Schalter S3 je nach seiner Stellung den Heizstrombegrenzer Rh kurzschließt oder wirksam schaltet. Der wirksam geschaltete Heizstrombegrenzer Rh ist hier so gewählt, daß er den Heizstrom Ih auf 75 % seines Nennwertes, der sich ergibt, wenn der Heizstrombegrenzer Rh unwirksam geschaltet ist, begrenzt.

Alle Schalter S1 bis S5 in der Figur 1 bzw. Sla bis S5 in Figur 2 sind jeweils miteinander gekoppelt und werden über ein jeweils gemeinsames Steuersignal PD, das das jeweilige Röhrenbildschirmgerät in einer sogenannten "Power-Down"-Zustand bzw. in eine Wartestellung schaltet, gesteuert.

Die Figuren 1 und 2 zeigen die Schalter in der Wartestellung des Röhrenbildschirmgerätes.

Die Hilfsspannung UGh2 für die erste Beschleunigungselektrode G2 weist einen Spannungspegel auf, der in der Wartestellung des betreffenden Röhrenbildschirmgerätes einen Stromfluß zwischen der Kathode K und der ersten Beschleunigungselektrode G2 hervorruft, der im vorliegenden Fall einen Bildweißwert erzeugt, der gegenüber dem Nennwert 5 % ausmacht.

Durch die Reduzierung der Heizspannung Uh der Bildröhre BR auf 75 % des Nennwertes und einem Kathodenstrom in Höhe von 5 % des Kathodenstroms bei Weißsteuerung der Bildröhre im Normalbetrieb wird eine optimale Betriebsart der Bildröhre BR erzielt. Die an der ersten Beschleunigungselektrode G2 angelegte Hilfsspannung UGh2 während der Wartestellung des Röhrenbildschirmgerätes verhindert durch Abzug der Elektronenwolke von der Heizkathode Kh eine Kathodenvergiftung und erhöht damit die zu erwartende durchschnittliche, fehlerfreie Betriebsdauer der Bildröhre BR.

Durch Abschalten der Anodenhochspannung, der horizontalen und vertikalen Ablenkung VA, HA, des Videoverstärkers VV und der Reduzierung der Heizspannung Uh wird die Leistungsaufnahme des Röhrenbildschirmgerätes erheblich vermindert. Gleichzeitig ist die Sofortbildfunktion nach Inbetriebnahme der Ablenkschaltungen VA, HA, Anlegen der diversen Gitterspannungen und des Videosignals Uk gegeben.

Die Lebensdauer des Röhrenbildschirmgerätes wird wesentlich erhöht.

Bei der Anwendung einer Hilfsstromversorgungseinheit SVh für die Heizspannung Uh und Hilfsspannung UGh2 wird die Leistungsaufnahme im Wartestellungsbetrieb nochmals reduziert, weil die Verluste der leer laufenden Hauptstromversorgungseinheit SVH in Figur 2 oder der großen Stromversorgungseinrichtung SV in Figur 1 verringert werden.

Die in den Figuren 1 und 2 dargestellte Prinzipschaltung des Röhrenbildschirmgerätes ist sowohl für Schwarz-Weiß- als auch für Farbbildröhren geeignet.

## Patentansprüche

1. Röhrenbildschirmgerät mit Wartestellungsfunktion, das eine Stromversorgungseinrichtung, einen Videoverstärker und eine Bildröhre enthält, die ein Elektronenstrahlerzeugungssystem mit einer Kathodenheizung, einer mit dem Videoverstärker verbundenen Kathode, einer Steuerelektrode, einer wenigstens ersten Elektronenbeschleunigungselektrode und einer Anode aufweist und zu der eine Vertikal- und Horizontal-Ablenkeinrichtung gehört, von denen die Horizontal-Ablenkeinrichtung der Steuerelektrode, der wenigstens ersten Elektronenbeschleunigungselektrode und der Anode als Spannungsgeber zugeordnet ist,
**dadurch gekennzeichnet**, daß in der Wartestellung des Röhrenbildschirmgerätes
a) die Vertikal- und Horizontal-Ablenkeinrichtung (VA, HA) von der Stromversorgungseinrichtung (SV) und der Videoverstärker (VV) von der Kathode (K) abgekoppelt sind,
b) die Kathodenheizung (Kh) an einen gegenüber einem vorgegebenen Nennwert einen prozentual wenigstens geringfügig herabgesetzten Heizstrom (Ih) liefernden Heizstrombegrenzer (Rh) angeschlossen ist, und
c) die erste Elektronenbeschleunigungselektrode (G2) an einen Ausgang der Stromversorgungseinrichtung (SV) angekoppelt ist, an dem eine in der Höhe derart vorgewählte Spannung (UGh2) anliegt, daß in Verbindung mit einem anstelle des Videoverstärkers (VV) an die Kathode (K) angeschlossenen, auf ein Massepotential bezogenen Widerstand (Rk) ein Strom von der Kathode (K) zur ersten Elektronenbeschleunigungselektrode (G2) in Höhe eines Bildweißwertes fließt, der gegenüber einem vorgegebenen Nennwert einem wenigstens geringen prozentualen Anteil entspricht.

2. Röhrenbildschirmgerät nach Anspruch 1,
**dadurch gekennzeichnet**,
daß die Stromversorgungseinrichtung als Haupt- und Hilfsstromversorgungseinheit (SVH, SVh) realisiert ist, von denen die Hauptstromversorgungseinheit (SVH) mit der Vertikal- und Horizontal-Ablenkeinrichtung (VA, HA) und die Hilfsstromversorgungseinheit (SVh) wenigstens mit der Kathodenheizung (Kh) der Bildröhre (BR) verbunden sind, und daß in der Wartestellung des Röhrenbildschirmgerätes die Hauptstromversorgungseinheit (SVH) von einem Wechselstromnetz (NT) abgekoppelt ist und die erste Elektronenbeschleunigungselektrode (G2) an einen Ausgang der Hilfsstromversorgungseinheit (SVh) angekoppelt ist, an dem eine in der Höhe derart vorgewählte Spannung (UGh2) anliegt, daß in Verbindung mit einem an die Kathode (K) angeschlossenen Widerstand (Rk) ein Strom von der Kathode (K) zur ersten Elektronenbeschleunigungselektrode (G2) in Höhe eines Bildweißwertes fließt, der gegenüber einem vorgegebenen Nennwert einem wenigstens geringen prozentualen Anteil entspricht.

3. Röhrenbildschirmgerät nach Anspruch 1 oder 2,
**dadurch gekennzeichnet**, daß der Heizstrom (Ih) in der Wartestellung des Röhrenbildschirmgeräts um 25 % herabgesetzt ist.

4. Röhrenbildschirmgerät nach einem der vorherigen Ansprüche, **dadurch gekennzeichnet**, daß der geringe prozentuale Anteil des Bildweißwertes gegenüber dem vorgegebenen Nennwert 5 % beträgt.

## Claims

1. Vacuum-tube screen device with a stand-by control function which contains a power supply unit, a video amplifier and a picture tube which exhibits an electron beam generating system with a cathode heater, a cathode connected to the video amplifier, a control electrode, an at least first electron acceleration electrode and an anode and to which a vertical and horizontal deflection device belongs, of which the horizontal deflection device is allocated to the control electrode, the at least first electron acceleration electrode and the anode as voltage generator, characterized in that in the stand-by position of the vacuum-tube screen device,
a) the vertical and horizontal deflection device (VA, HA) is disconnected from the power supply device (SV) and the video amplifier (VV) is disconnected from the cathode (K),
b) the cathode heater (Kh) is connected to a heating current limiter (Rh) which delivers a heating current (Ih) which is at least slightly reduced in percentage compared with a predetermined nominal value, and
c) the first electron acceleration electrode (G2) is connected to an output of the power supply device (SV) at which a voltage (UGh2) is present, the magnitude of which is preselected in such a manner that, in connection with a resistor (Rk) which is referred to earth potential and is connected to the cathode (K) instead of the video amplifier (VV), a current of the magnitude of a picture white value flows from the cathode (K) to the first electron acceleration electrode (G2), which current corresponds to an at least slight percentage proportion compared with a predetermined nominal value.

2. Vacuum-tube screen device according to Claim 1, characterized in that the power supply device is implemented as main and auxiliary power supply unit (SVH, SVh), of which the main power supply unit (SVH) is connected to the vertical and horizontal deflection device (VA, HA) and the auxiliary power supply unit (SVh) is connected at least to the cathode heater (Kh) of the picture tube (BR), and in that, in the stand-by position of the vacuum-tube screen device, the main power supply unit (SVH) is disconnected from an alternating-current power system (NT) and the first electron acceleration electrode (G2) is connected to an output of the auxiliary power supply unit (SVh) at which a voltage (UGh2) is present, the magnitude of which is preselected in such a manner that, in connection with a resistor (Rk) connected to the cathode (K), a current of the magnitude of a picture white value flows from the cathode (K) to the first electron acceleration electrode (G2), which current corresponds to an at least slight percentage proportion compared with a predetermined nominal value.

3. Vacuum-tube screen device according to Claim 1 or 2, characterized in that the heating current (Ih) is reduced by 25% in the stand-by position of the vacuum-tube screen device.

4. Vacuum-tube screen device according to one of the preceding claims, characterized in that the slight percentage proportion of the picture white value is 5% compared with the predetermined nominal value.

## Revendications

1. Terminal avec écran cathodique comportant une fonction de position d'attente, qui comprend un dispositif d'alimentation en courant, un amplificateur vidéo et un tube image qui est pourvu d'un système de production de faisceaux d'électrons avec un élément de chauffage de la cathode, une cathode reliée à l'amplificateur vidéo, une électrode de commande, une - au moins - première électrode d'accélération des électrons et une anode, et auquel appartient un dispositif de balayage vertical et horizontal dont le dispositif de balayage horizontal est associé à l'électrode de commande, à la - au moins - première électrode d'accélération des électrons et à l'anode en tant que générateur de tension, caractérisé en ce que, dans la position d'attente du terminal avec écran cathodique,
a) le dispositif de balayage vertical et horizontal (VA, HA) est découplé du dispositif d'alimentation en courant (SV) et l'amplificateur vidéo (VV) est découplé de la cathode (K),
b) l'élément de chauffage de la cathode (Kh) est relié à un limiteur de courant de chauffage (Rh) fournissant un courant de chauffage (Ih) qui, en pourcentage, est au moins légèrement inférieur par rapport à une valeur nominale prédéterminée, et
c) la première électrode d'accélération des électrons (G2) est couplée à une sortie du dispositif d'alimentation en courant (SV) à laquelle est appliquée une tension (UGh2) dont la valeur est présélectionnée de manière à ce que, en liaison avec une résistance (Rk) mise à un potentiel de masse et reliée à la cathode (K) à la place de l'amplificateur vidéo (VV), un courant équivalent à un niveau de blanc de l'image correspondant à au moins un faible pourcentage par rapport à une valeur nominale prédéterminée circule de la cathode (K) vers la première électrode d'accélération des électrons (G2).

2. Terminal avec écran cathodique selon la revendication 1, caractérisé en ce que le dispositif d'alimentation en courant est réalisé en tant qu'unité d'alimentation en courant principale et auxiliaire (SVH, SVh) dont l'unité d'alimentation en courant principale (SVH) est reliée au dispositif de balayage vertical et horizontal (VA, HA) et l'unité d'alimentation en courant auxiliaire (SVh) est reliée au moins à l'élément de chauffage de la cathode (Kh) du tube image (BR), et en ce que, dans la position d'attente du terminal avec écran cathodique, l'unité d'alimentation en courant principale (SVH) est découplée d'un secteur à courant alternatif (NT) et la première électrode d'accélération des électrons (G2) est couplée à une sortie de l'unité d'alimentation en courant auxiliaire (SVh) à laquelle est appliquée une tension (UGh2) dont la valeur est présélectionnée de manière à ce que, en liaison avec une résistance (Rk) reliée à la cathode (K), un courant équivalent à un niveau de blanc de l'image correspondant à au moins un faible pourcentage par rapport à une valeur nominale prédéterminée circule de la cathode (K) vers la première électrode d'accélération des électrons (G2).

3. Terminal avec écran cathodique selon la revendication 1 ou 2, caractérisé en ce que le courant de chauffage (Ih) est diminué de 25% dans la position d'attente du terminal avec écran cathodique.

4. Terminal avec écran cathodique selon l'une des revendications précédentes, caractérisé en ce que le faible pourcentage du niveau de blanc de l'image correspond à 5% par rapport à la valeur nominale prédéterminée.
